Europäisches Patentamt

European Patent Office

Office européen des brevets

(11) Publication number: **0 292 196**
**A2**

# EUROPEAN PATENT APPLICATION

(21) Application number: **88304300.2**

(22) Date of filing: **12.05.88**

(51) Int. Cl.⁴: **D01D 10/00 , D01F 6/04 , B29C 55/00**

(30) Priority: **18.05.87 JP 121808/87**

(43) Date of publication of application:
**23.11.88 Bulletin 88/47**

(84) Designated Contracting States:
**AT BE CH DE ES FR GB GR IT LI LU NL SE**

(71) Applicant: **MITSUI PETROCHEMICAL INDUSTRIES, LTD.**
**2-5, Kasumigaseki 3-chome Chiyoda-ku Tokyo 100(JP)**

(72) Inventor: **Kato, Akifumi**
**12-3, Shinmachi 2-chome**
**Otake-shi Hiroshima(JP)**
Inventor: **Shindo, Masatoshi**
**2-1, Misono 1-chome**
**Otake-shi Hiroshima(JP)**
Inventor: **Yoshimura, Yoshihiro**
**13-13, Imazu-cho 4-chome**
**Iwakuni-shi Yamaguchi(JP)**

(74) Representative: **Myerscough, Philip Boyd et al**
**J.A.Kemp & Co. 14, South Square Gray's Inn London, WC1R 5EU(GB)**

(54) **Process and apparatus for treating continuously elongated article.**

(57) A process for treating a continuously elongated article (3) such as a filament or tape of a thermoplastic resin by passing the article (3) through a treating liquid (2) and along at least three rolls (5a, 5b, 5c) immersed in the treating liquid, to extract an additive contained in the article (3) and/or orientate the article (3) wherein article (3) is brought into contact with at least one-fourth of the circumference of at least one roll (5b) other than the first (5a) and end (5c) rolls immersed in the treating liquid (2). An apparatus for performing this process is also disclosed.

## Fig. 5 A

0 292 196

# PROCESS AND APPARATUS FOR TREATING CONTINUOUSLY ELONGATED ARTICLE

## BACKGROUND OF THE INVENTION

### 1. Field of the Invention

The present invention relates to a process and apparatus for treating a continuously elongated article (hereinafter defined as, for example, a filament) of a thermoplastic resin which has been extruded from a die and cooled, to extract an additive contained in the article and/or orientate the article, and a continuously elongated article treated by that process.

### 2. Description of the Related Art

Japanese Unexamined (Kokai) Patent Publications No. 59-130313, No. 60-240432, and No. 61-8323 disclose a process for treating a filament to extract additives contained therein and/or stretching the same. In these processes, a composition comprising an ultrahigh molecular weight polyethylene and an additive which is solid at a normal temperature is melt kneaded, extruded through a die, cooled for setting up, and thereafter, stretched in an extracting bath wherein it is brought into counterflow contact with an organic solvent such as decalin, decane or kerosine, whereby the solid additives are extracted, irregular orientation is corrected, a high stretching magnification is achieved, and a stretched filament having a high elastic modulus and tensile strength is produced.

In this field, however, there is still a need to improve the extraction process for extracting the additives contained in the filament or the like, and to increase the stretching magnification or reduce the frequency of breakages at stretching when the filament or the like is stretched.

## SUMMARY OF THE INVENTION

After conducting various research projects into ways in which to improve the process for extracting additives contained in the filament or the like, and the stretch ratio of the filament or the like, the present inventors found that, when a roll dipped in a treating liquid is in contact with the filament or the like on about one-fourth of the circumference thereof or more, the extraction process and stretch ratio are improved even if the length of the filament running through the treating liquid is not changed, in comparison with the conventional method wherein the corresponding roll is in contact with the filament on a much smaller part of the circumference, and a stretch ratio which is the same as that obtained in the conventional method can be achieved with a considerable reduction of the frequency of breakages upon stretching.

Accordingly, the object of the present invention is to provide an improved treatment of the filament or the like.

Other objects and advantages of the present invention will be apparent from the following description.

In accordance with the present invention, there is provided a process for treating a continuously elongated article of a thermoplastic resin by passing the article through a treating liquid along at least three rolls dipped in the treating liquid to perform an extraction of an additive contained in the article and/or an orientation of the article, characterized in that the continuously elongated article is brought into contact with about one-fourth or more of the circumference of at least one roll dipped in the treating liquid other than the first and end rolls.

Further, the present invention provides an apparatus for treating the continuously elongated article comprising a treating vessel containing a treating liquid therein and at least three rolls dipped in the treating liquid, and characterized in that the rolls are arranged so that the continuously elongated article is brought into contact with about one-fourth or more of the circumference of at least one roll dipped in the treating liquid, other than the first and end rolls.

The term "continuously elongated article" used herein means an article formed by drawing the melt of a thermoplastic resin composition through a die and then cooling the drawn melt without extracting an additive contained in the composition and without stretching. The continuously elongated article includes,

2

for example, a filament such as a monofilament or multifilament, or a tape. In the following description, the filament will be used as an exemplary article, to simplify the description, but it will be understood that all of the description and explanation in relation to the filament is equally applicable to various continuously elongated articles, and that the present invention is not limited to the filament.

BRIEF EXPLANATION OF THE DRAWINGS

Figure 1 is a schematic sectional view of one embodiment of the apparatus according to the present invention;

Figure 2 is a schematic sectional view of another embodiment of the apparatus according to the present invention;

Figure 3 is a schematic sectional view of still another embodiment of the apparatus according to the present invention;

Figure 4 is a schematic sectional view of a conventional apparatus; and,

Figures 5A to 5F illustrate basic patterns of stretching the filament according to the present invention.

DESCRIPTION OF THE PREFERRED EMBODIMENTS

A typical thermoplastic resin as treated in the present invention is an ultrahigh molecular weight polyolefin. The ultrahigh molecular weight polyolefin typically used in the present invention has an intrinsic viscosity $[\eta]$ of about 5 dl/g or more, preferably about 7 to 30 dl/g (measured at 135°C in decalin). Although a homogeneous mixture can be easily prepared from a polyolefin having an intrinsic viscosity $[\eta]$ of less than 5 dl/g, it is difficult to obtain therefrom an article having a high modulus of elasticity and high strength characteristics, because of a relatively short molecular chain thereof. There is no particular upper limit to the intrinsic viscosity $[\eta]$, but a polyolefin having an intrinsic viscosity of more than 30 dl/g has a high melting viscosity such that, even if an additive is introduced, the extrusion moldability is poor.

The ultrahigh molecular weight polyolefin in the present invention includes, for example, homopolymers or copolymers of $\alpha$-olefin such as ethylene, propylene, 1-butene, 1-pentene, 1-hexene, 1-octene, 1-decene, or 4-methyl-l-pentene. The highly crystalline homopolymer of ethylene or copolymer of ethylene of a major component with other $\alpha$-olefin is preferable, because a high modulus of elasticity and a high tensile strength can be obtained.

The additive incorporated into the thermoplastic resin composition is preferably an aliphatic hydrocarbon compound or a derivative thereof.

The aliphatic hydrocarbon compound is typically a saturated aliphatic hydrocarbon compound, preferably a paraffin wax having a molecular weight of, usually, 2000 or less, more preferably 1000 or less, and particularly preferably, 800 or less. The aliphatic hydrocarbon compound includes, for example, n-alkane having 22 carbon atoms or more, such as docosane, tricosane, tetracosane or triacontane, a mixture of the n-alkane of a major component with lower n-alkane, paraffin wax separated from petroleum and purified, a moderate- or low-pressure polyethylene wax which is a low molecular weight polymer prepared from ethylene or by copolymerization of ethylene and another $\alpha$-olefin, a high-pressure polyethylene wax, an ethylene copolymerized wax, a wax prepared by thermal degradation of polyethylene such as a moderate- or low-pressure polyethylene or high-pressure polyethylene, to lower the molecular weight, and oxidized waxes and maleic acid modified waxes obtained by oxidizing the above waxes, or maleic acid modified waxes, or the like.

The derivative of the aliphatic hydrocarbon compound is, for example, a fatty acid, aliphatic alcohol, fatty acid amide, fatty acid ester, aliphatic mercaptan, aliphatic aldehyde, aliphatic ketone or the like, having 1 or more, preferably 1 or 2, particularly preferably 1, functional group such as carboxyl, hydroxyl, carbamoyl, ester, mercapto, or carbonyl group at the terminal of or in the aliphatic hydrocarbon radical (alkyl or alkenyl group), and 8 or more, preferably 12 to 50, carbon atoms, or a molecular weight of 130 - 2000, preferably 250 - 800.

More particularly, the fatty acid includes capric, lauric, myristic, palmitic, stearic or oleic acid, the aliphatic alcohol includes lauryl, myristyl, cetyl or stearyl alcohol, the fatty acid amide includes capric, lauric, palmitic or stearic amide, and the fatty acid ester includes stearly acetate or the like.

The ratio of the ultrahigh molecular weight polyolefin to the additive may vary, depending upon the materials used. Generally speaking, it is preferable to use the above materials in a weight ratio of 3:97 to 80:20, particularly 15:85 to 60:40. If the amount of the additive is lower than that range, the melting viscosity

3

becomes very high and thus melt kneading or melt molding is difficult, the surface roughening of the moldings is considerable, and a break at stretching often occurs. If the amount of the additive is higher than that range, melt kneading is difficult and the stretchability is degraded.

Preferably, the melt kneading is carried out at a temperature of 150 - 300°C, particularly preferably, 170 - 270°C. If the temperature is lower than this range, the melting viscosity becomes very high, and thus melt molding becomes difficult. If the temperature is higher than that range, the molecular weight of the ultrahigh molecular weight polyolefin is reduced by thermal degradation, and thus it becomes difficult to obtain a molding having a high modulus of elasticity and a high strength. Blending may be carried out by a dry blend in a Henschel mixer, twin-shell blender or the like, or by melt mixing using a single or multiple screw extruder.

Melt molding is generally carried out by melt extrusion molding. For example, a filament for stretching is obtained by melt extrusion through a spinneret, and a tape for stretching is obtained by extrusion through a flat die. The present invention is suitable particularly for the production of an oriented filament, and in this case, the melt extruded through the spinneret may be drafted. Namely, drawing may be effected in a molten state. The draft ratio can be defined as a ratio of a take-up speed (V) of the nonoriented filament set up by cooling to an extrusion speed ($V_0$) of the melted resin in the die orifice. The equation may be represented as follows:     Draft ratio = $V/V_0$

The draft ratio may be generally 3 or more, preferably 6 or more, although the ratio varies in accordance with the temperature of the mixture, the molecular weight of the ultrahigh molecular weight polyolefin, and so on.

In the next step, the stretching of the resulting non-oriented filament of the ultrahigh molecular weight polyolefin is performed. As is obvious, the stretching is carried out so that a molecular orientation in at least in one direction can be achieved in the ultrahigh molecular weight polyolefin of the final article.

The filament of the ultrahigh molecular weight polyolefin is stretch-treated at a temperature of. generally 40 - 160°C, particularly 80 - 145°C. As the treating liquid, which also serves as a heating medium to heat and maintain the non-oriented filament at that temperature, any liquid medium can be used. Preferably, however, the stretching process uses, as the treating liquid, a solvent which can elute the above-mentioned additives and has a boiling point higher than that of the composition of the filament (e.g., decalin, decane, kerosine or the like), because the above additives can be thus removed and any irregular orientation upon stretching can be eliminated, and therefore, a high stretching magnification can be achieved.

The stretching can be performed in a single step or by multiple steps, i.e., two steps or more. A desirable result is obtained when the stretching is carried out so that the stretching magnification is 5 to 80 times, particularly 10 to 50 times, although the stretching magnification depends on the desired molecular orientation and the effect of the elevated melting temperature caused thereby.

Generally, a multiple stretching comprising two steps or more is preferable. In the first step, the stretching is performed at a relatively low temperature of 80 - 120°C, to extract the additives in the filament, and in the second and any subsequent steps, preferably the stretching of the filament is continued at a temperature higher than that of the first step, i.e., 120 -160°C.

The filament may be stretched by drawing between rolls having different circumferential velocities. The term "roll" used herein means generally a roll rotatably mounted on the treating vessel, but includes a bar unrotatably fixed thereon.

In the present invention, at least three rolls are dipped in the treating liquid. Further, the filament is brought into contact with about one-fourth or more of the circumference of at least one roll dipped in the treating liquid, other than the first and end rolls.

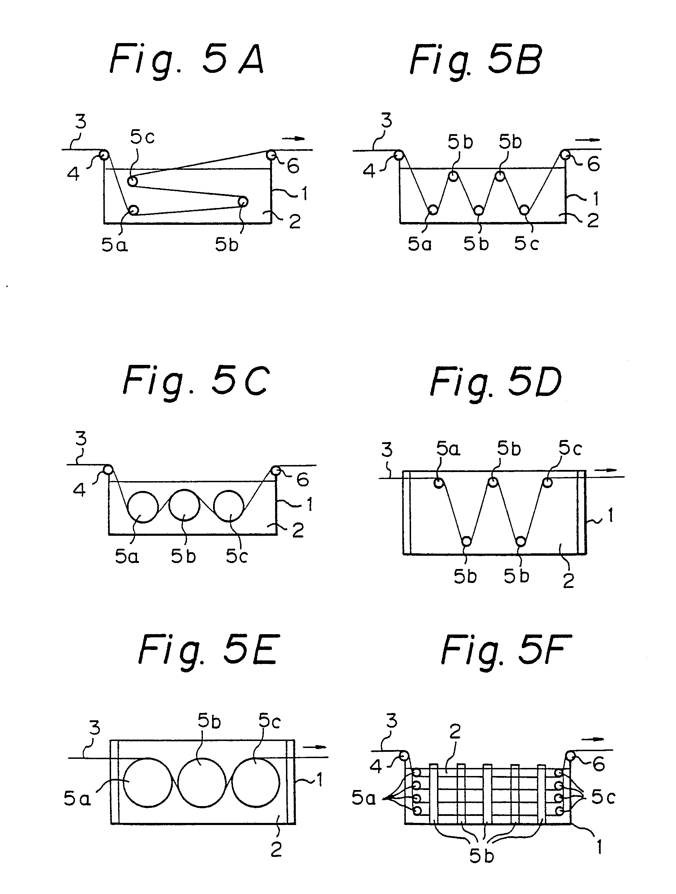

Referring to Figures 5A to 5F, typical arrangements of the rolls according to the present invention will be explained hereinafter.

Figure 5A is a schematic sectional view of the treating vessel 1 containing the treating liquid 2. The non-oriented filament 3 is drawn from an introducing roll 4 through a first roll 5a and a roll 5b which characterize the present invention by being in contact with the filament on about one-fourth or more of the circumference thereof, thereby changing the drawing direction of the filament by 90° or more (referred to as "characteristic roll" hereinafter), and then over an end roll 5c, which is also a characteristic roll, to a take-up roll 6. Figure 5B is a sectional view of another arrangement according to the present invention, which includes three characteristic rolls 5b. The first and end rolls in this case are also characteristic rolls. Figure 5C is a sectional view of one embodiment wherein rolls having a large diameter are used. Figures 5D and 5E are schematic plan views of other embodiments wherein the rolls are mounted vertically. Figure 5F is a sectional view of still another embodiment wherein five characteristic rolls 5b are mounted vertically, and four first rolls 5a and four end rolls 5c are each mounted horizontally, whereby four filaments can be treated

4

simultaneously. In the present invention, the filament is preferably in contact with the characteristic roll on about one-fourth to one half of the circumference thereof. But the filament may be wrapped around more than a full circumference of the roll, so long as the filament is not entangled. In the present invention, the above basic arrangements of rolls as shown in Figures 5A to 5F may be employed individually or in combination.

In the present invention, the greater the number of characteristic rolls, the better the results that can be obtained. From experiments, it was observed that the extraction efficiency and the stretching magnification are increased with the increase of the amount of contact with the circumference of, or the number of, the characteristic rolls, and that the frequency of breakage at stretching is reduced in comparison with that observed in a prior art, under the same stretching magnification.

## EXAMPLES

The present invention now will be further illustrated by, but is by no means limited to, the following Examples.

### Example 1

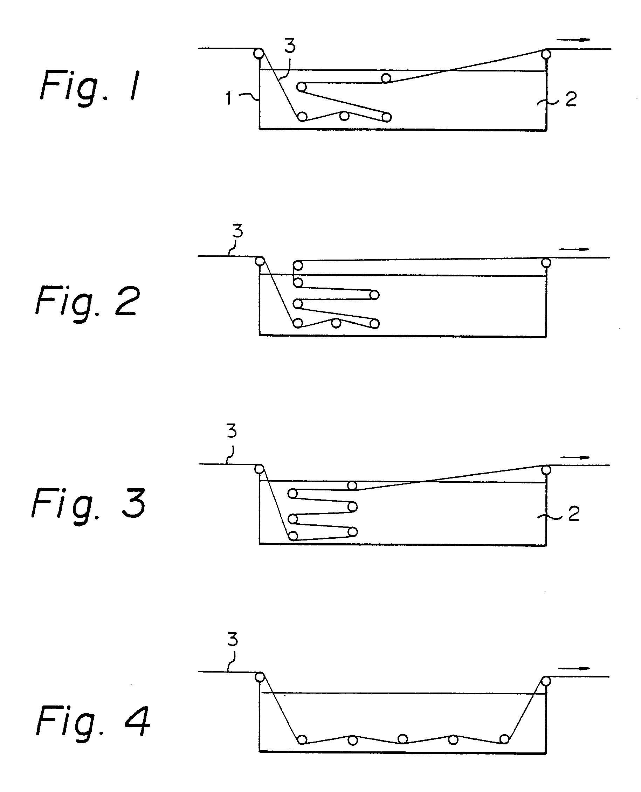

This example, as illustrated in Figure 1, used a treating vessel 1 containing decane liquid 2 wherein three rolls were arranged in the lower portion of the vessel 1 and two rolls were arranged in the upper portion thereof, each roll being mounted horizontally at appropriate intervals. A non-oriented filament 3 comprising polyethylene [PE] (intrinsic viscosity = 7.2 d/g at 135°C in decalin) and paraffin wax (melting point: 69°C, molecular weight: 480) at a blending ratio of 35:65 was passed round five rolls in the form of a turned letter Z as shown in Figure 1, and 4 meters of the filament was dipped in the liquid. Then, the filament was introduced at the rate of 5 m/min, passed along three paths (forward, backward, and forward), and drawn at a rate of 30.0 m/min. The resulting oriented filament contained 26.5% of residual wax.

### Example 2

The procedure of Example 1 was repeated, except that two additional rolls were arranged in the upper portion near the inlet side, one of the additional rolls was dipped in the liquid, the non-oriented filament was passed round rolls in the form of a sideways letter W, and 3.9 m of the filament was dipped and passed along 4 paths (see Figure 2). The resulting oriented filament contained 20.6% of residual wax.

### Comparative Example 1

The procedure of the above Example 1 was repeated, except that five rolls were arranged in a straight line to a transverse direction, and the non-oriented filament was passed around the rolls and along one path (see Figure 4). The resulting oriented filament contained 28.6% of residual wax.

### Example 3

The procedure of Example 1 was repeated, except that decane was replaced by triethyleneglycol and 5.9 m of non-oriented filament was dipped. The filament was stretched at the maximum outlet rate of 130 m/min, without a break.

### Example 4

As shown in Figure 3, six rolls were arranged in a double line, and the non-oriented filament 3 was passed around the six rolls and along 5 paths. In triethyleneglycol 2, 6 m of the filament was dipped. The stretching was carried out as in Example 3, and the filament was drawn at a maximum outlet rate of 145 m min.

## Comparative Example 2

The procedure of Comparative Example 1 was repeated, except that decane was replaced by triethyleneglycol and 6.2 m of the non-oriented filament was dipped. The maximum outlet rate at which a break of the filament did not occur was 115 m/min.

The results are shown in Tables 1 and 2.

### Table 1: Extraction of Wax in Decane

| | Number of rolls | Number of paths | Rate of filament (m/min) | | Length dipped in liquid (m) | Decane concentration[1] (%) | Wax amount[2] (%) |
|---|---|---|---|---|---|---|---|
| | | | Inlet | Outlet | | | |
| Example 1 | 5 | 3 | 5.0 | 30.0 | 4 | 16.4 | 26.5 |
| Example 2 | 7 | 4 | 5.0 | 30.0 | 3.9 | 16.2 | 20.6 |
| Comparative Example 1 | 5 | 1 | 5.0 | 30.0 | 4 | 16.2 | 28.6 |

1) ... $\left[wax/(decane + wax)\right] \times 100$

2) ... $\left[wax/(PE + wax)\right] \times 100$

### Table 2: Stretching Effect in Triethyleneglycol

| | Number of rolls | Number of paths | Length dipped in liquid (m) | Maximum outlet rate (m/min) |
|---|---|---|---|---|
| Example 3 | 5 | 3 | 5.9 | 130 |
| Example 4 | 6 | 5 | 6 | 145 |
| Comparative Example 2 | 5 | 1 | 6.2 | 115 |

Although the present invention has been described with reference to specific embodiments, various changes and modifications obvious to those skilled in the art are deemed to be within the spirit, scope and concept of the invention.

## Claims

1. A process for treating a continuously elongated article (3) of a thermoplastic resin by passing said article (3) through a treating liquid (2) and along at least three rolls (5a, 5b, 5c) immersed in the treating liquid (2) to perform an extraction of an additive contained in said article (3) or an orientation of said article (3) characterised in that said article (3) is brought into contact with at least one-fourth of the circumference of at least one roll (5b) other than first (5a) and end (5c) rolls immersed in the treating liquid (2).

2. A process according to claim 1, wherein said continuously elongated article (3) is a filament or tape.

3. A process according to claim 1 or 2, wherein the thermoplastic resin is prepared from a composition of an ultrahigh molecular weight polyolefin and an additive.

4. A process according to claim 3, wherein said composition comprises 3 to 80 parts by weight of an ultrahigh molecular weight polyethylene having an intrinsic viscosity of 5 dl/g or more and 97 to 20 parts by weight of an aliphatic hydrocarbon compound or a derivative thereof having a molecular weight of 2000 or less.

5. An apparatus comprising a treating vessel (1) containing a treating liquid (2) therein and at least three rolls (5a, 5b, 5c) immersed in said treating liquid (2), wherein a continuously elongated article (3) of a thermoplastic resin is passed through the treating liquid (2) and along said at least three rolls (5a, 5b, 5c) to perform an extraction of an additive contained in said article (3) and/or an orientation of said article (3), characterized in that said rolls (5a, 5b, 5c) are arranged so that said article (3) is brought into contact with at least one-fourth of the circumference of at least one roll (5b) other than first (5a) and end (5c) rolls immersed in the treating liquid (2).

6. An apparatus according to claim 5, wherein the continuously elongated article (3) is a filament or tape.

7. An apparatus according to claim 5, wherein the thermoplastic resin is prepared from a composition of an ultrahigh molecular weight polyolefin and an additive.

8. An apparatus according to claim 7, wherein the composition comprises 3 to 80 parts by weight of an ultrahigh molecular weight polyethylene having an intrinsic viscosity of 5 dl/g or more and 97 to 20 parts by weight of an aliphatic hydrocarbon compound or a derivative thereof having a molecular weight of 2000 or less.

*Fig. 1*

*Fig. 2*

*Fig. 3*

*Fig. 4*

# Fig. 5 A

# Fig. 5B

# Fig. 5 C

# Fig. 5D

# Fig. 5E

# Fig. 5F